# EUROPÄISCHE PATENTSCHRIFT

(11) **EP 1 522 555 B1**
(45) Veröffentlichungstag und Bekanntmachung des Hinweises auf die Patenterteilung: **21.02.2007**
(21) Anmeldenummer: 04022500.5
(22) Anmeldetag: 22.09.2004
(51) Int. Cl.: C08L 77/00, C08L 51/06, C08F 285/00

(54) **Schlagzähe Polyamid-Formmassen**
Impact resistant polyamide moldings
Matières moulées en polyamide résistantes au chocs

(30) Priorität: 09.10.2003 DE 10347392
(43) Veröffentlichungstag der Anmeldung: 13.04.2005
(73) Patentinhaber: Kometra Kunststoff-Modifikatoren und Additiv GmbH, 06429 Neugattersleben (DE)
(72) Erfinder: Häussler, Lutz, Dr.Dipl.-Chem., 06108 Halle (DE); Gerecke, Jochen, Dr.Dipl.-Chem., 06122 Halle (DE); Rapthel, Inno, Dr.Dipl.-Chem., 06120 Halle (DE); Besser, Klaus-Dieter, Dipl.-Ing., 04158 Leipzig (DE)
(74) Vertreter: Voigt, Wolf-Rüdiger

(56) Entgegenhaltungen:
- EP-A- 0 668 323
- US-A- 5 420 206
- US-B1- 6 331 592

## Beschreibung

Die Erfindung betrifft schlagzähe Polyamid-Formmassen aus 40 bis 99 Masse-% eines thermoplastischen Polyamids und 1 bis 60 Masse-% eines kompatiblen Ethylen(co)polymers bzw. Ethylen(co)polymercompounds sowie ein Verfahren zu ihrer Herstellung.

Für zahlreiche Anwendungen von Formmassen auf Basis thermoplastischer Polyamide (PA), insbesondere Polycapronamid (PA 6), Polyhexamethylenadipinamid (PA 6.6) bzw. ihrer Mischkondensate (PA 6.6/6), Polylaurinlactam (PA 12), Polyundecanolactam (PA 11) und anderer, ist eine hohe Gebrauchszähigkeit im trockenen bzw. unkonditionierten ("spritzfrischen") Zustand bei gleichzeitiger Sicherung eines hohen Festigkeits-Steifigkeits-Niveaus über einen breiteren Temperaturbereich zu erreichen. Diese Forderung kann durch Einarbeiten einer geeigneten verträglichen Schlagzähkomponente erfüllt werden.

Als besonders wirksame polymere Schlagzähmodifikatoren werden entweder olefinische Co- und Terpolymere mit in der Hauptkette eingebauten carbonsäure- oder anhydridgruppenhaltigen Monomereinheiten - oder für die Erreichung besonders hoher Schlagzäh-Kennwerte - durch Pfropfung von Säure(anhydrid)monomeren, insbesondere (Meth)Acrylsäure, Fumarsäure, Maleinsäureanhydrid und Itaconsäureanhydrid, modifizierte Olefinpolymere verwendet. Die Schlagzähwirkung beider Modifikatorarten basiert auf der chemischen Reaktion ihrer Carboxyl- bzw. Anhydridgruppen mit den Polyamid-Aminogruppen, wodurch die "elastomeren" olefinischen Polymerrückgratpartikel feinteilig in der PA-Matrix dispergiert werden und die Zähigkeit des Polyamids sprunghaften ansteigt.

Die in Polyamid-Formmassen eingesetzten carboxylierten Olefinpolymere auf Basis von Polyethylenen (LDPE, HDPE) und besonders Ethylen/α,β-ethylenisch ungesättigten C₃- bis C₁₂-Olefin (vorzugsweise Propen und/oder Buten und/oder (Methyl-) Penten und/oder Hexen und/oder 1-Octen)-Copolymeren, des Weiteren Ethylen/Vi-nylacetat- und Ethylen/(Meth)Acrylsäure-C₂- bis C₁₈-Alkylester-Copolymeren, Styrol/ Ethylen-Butylen/ Styrol- oder Styrol/Ethylen-(Ethylen)-Propylen/Styrol-Dreiblockcopolymeren, einschließlich ihrer Compounds untereinander oder mit Polypropylen (PP) und solcher, die als Hauptkomponente E-thylen/Propylen-Copolymere (EPM) oder Ethylen/ Propylen/(nicht konjugiertes) Dien-Terpolymere (EPDM) besitzen, werden im Allgemeinen mittels reaktiver Extrusion bei hohen Temperaturen (150-300 °C) durch Pfropfung eines Säuremonomers, wie besonders Maleinsäureanhydrid (MSA), auf ein olefinisches Rückgratpolymer in Gegenwart eines radikalbildenden peroxidischen Initiators hergestellt (US 4.174.358, EP 0180302 A2, EP 0235876 B1, EP 0266221 B1, EP 0287140 B1, EP 0403109 A2, WO 91/18053; EP 0581360 B1, EP 0696303 B1, EP 0878510 B1).

Die mit solchen Schmelzepfropfprodukten ausgerüsteten schlagzähen Polyamid-Formmassen genügen auf Grund der zumeist geringen Pfropfgrade der carboxylierten Olefinpolymere und ihrer dadurch geringen Schlagzähwirkung, bedingt durch die hohen Reaktionstemperaturen und kurzen Verweilzeiten im Extruder sowie der zumeist gleichzeitig als Nebenreaktion auftretenden peroxidischen Vernetzung und gegebenenfalls zu beobachtenden Degradation des Polymerrückgrates, im Allgemeinen nicht höheren verarbeitungs- und anwendungstechnischen Ansprüchen.

Während die bei niedrigeren Reaktionstemperaturen, d. h. unterhalb des Schmelzpunkts des olefinischen Polymerrückgrates (Pfropfsubstrats) durchgeführte Pfropf-Funktionalisierung in einem Lösemittel auf Grund der technologisch sehr aufwendigen Polymer-Auflösung und vor allem der notwendigen Lösemittelabtrennung und -rückgewinnung nach erfolgter Pfropfreaktion keine wirtschaftliche Alternative zur Schmelze-Pfropfung von Säure(anhydrid)monomeren ist, basiert die in fest-fluider partikulärer Polymerphase durchgeführte Funktionalisierung von Olefinpolymeren auf einer wirtschaftlichen Technologie (DD 275159 A3, DD 275160 A3, DD 300977 A7, EP 0469693 B1, EP 0642538 B1, DE 4342605 A1, EP 0519341 B1).

Besonders geeignete Pfropfsubstrate sind teilkristalline Olefinpolymere, die in der sich zwischen ihrem Glas- und Schmelzpunkt ausbildenden amorphen Phase hohe Diffusionsgeschwindigkeiten für niedermolekulare Verbindungen wie Säure(anhydrid) monomere, eine Voraussetzung für hohe Carboxylierungsgrade, zulassen. Während der kristalline Anteil der Pfropfsubstrate die Formstabilität der Polymerpartikel bis zum Schmelzpunkt gewährleistet, erfolgt die eigentliche Pfropfung in den amorphen Bereichen des Pfropfsubstrats. Da die Pfropfpolymerisationsgeschwindigkeit in erster Linie von der Diffusionsgeschwindigkeit des Monomers abhängt, spielen auch die Morphologie des Olefinpolymers, insbesondere die Teilchengröße, und die Reaktionstemperatur eine wichtige Rolle.

Daraus folgt, dass die verschiedenen sich in ihrem kristallinen Aufbau unterscheidenden Olefinpolymere bezüglich ihrer Eignung als Festphasen-Pfropfsubstrat deutliche Unterschiede aufweisen. So werden hohe Pfropfgrade mit feinteiligen, insbesondere pulverförmigen Olefinpolymeren erreicht, die einen mittleren bis hohen Kristallinitätsgrad besitzen (DD 275159 A3, DD 300977 A7, DE 4123972 A1).

Amorphe sowie niedrig-kristalline, im Allgemeinen leicht aufschmelzbare Olefinpolymere sind als Polymerrückgrat - wenn überhaupt als Pulver verfügbar - für die freie radikalische Festphasen-Pfropfung nicht oder nur bedingt, d. h. nur unter Akzeptanz sehr geringer Pfropfgrade, verwendbar. Somit bleibt verschiedenen, besonders für die Schlagzäh-Ausrüstung von Polyamiden wirksamen Olefinelastomeren, die in geeigneter Weise zuvor carboxyliert werden müssen, die Festphasen-Pfropffunktionalisierung verschlossen.

Zu den effektiven olefinischen Schlagzähmodifikatoren zählen vor allem lineare Ethylencopolymere mit niedriger Dichte, entweder mit einem niedrigen C₃- bis C₈-Olefin-Comonomeranteil von unterhalb 10 Masse-% (LLDPE) oder mit höherem C₄- bis C₈-Olefin-Comonomeranteil (oberhalb 10 Masse-%), insbesondere E-thylen/1-Octen-Copolymere (EOC), die zwecks ihrer Funktionalisierung ausschließlich mittels Schmelze-Pfropfung bevorzugt unter Verwendung von MSA als Pfropfagens carboxyliert (US 5.346.963, WO 98/ 42760 A1, US 6.384.139 B1, US 6.331.592 B1; DE 198 41 303 A1, WO 01/92357A1) und bevorzugt als Schlagzähkomponente in Polyamide eingemischt werden (EP 0696303 B1, EP 0754731 B1, EP 0878510 B1).

Der Nachteil der schmelzegepfropften linearen Ethylencopolymere besteht in ihrem niedrigen Carboxylierungsgrad oder - bei stärkerer Carboxylierung mit hohen Konzentrationen an peroxidischem Initiator - in ihrem hohen Vernetzungsgrad, der sich besonders für die Schlagzähausrüstung von Polyamiden negativ auswirkt.

Darüber hinaus sind für die "erzwungene" höhere Carboxylierung, insbesondere für MSA-Pfropfgehalte > 0,5 Masse-%, deutlich höhere Säuremonomer-Mengen notwendig, die zum überwiegenden Teil bei den im Reaktionsextruder vorliegenden hohen Temperaturen und kurzen Verweilzeiten nicht vollständig umgesetzt werden oder durch Bildung flüchtiger oligomerer Reaktionsprodukte sich der Pfropfreaktion entziehen und damit nicht nur die Pfropfeffizienz stark absenken, sondern auch sehr kostenintensive Maßnahmen zwecks Einschränkung der Umweltbelastung erfordern.

Die Aufgabe der vorliegenden Erfindung bestand darin, unter Vermeidung der beschriebenen Nachteile schlagzähe Polyamid-Formmassen mittels pfropfmodifizierter Ethylen/α,β-ethylenisch ungesättigte C₃- bis C₁₂-Olefin-Copolymere bzw. -Copolymerblends sowie ein Verfahren ihrer Herstellung zu entwickeln.

Gegenstand der vorliegenden Erfindung sind schlagzähe Polyamid-Formmassen der Zusammensetzung 40 bis 99 Masse-% eines thermoplastischen Polyamids und 1 bis 60 Masse-% einer Ethylencopolymer(blend)-Komponente erhalten dadurch, dass in einer 1. Stufe
auf 100 Masseteile fest-fluides partikuläres Ethylencopolymer der Zusammensetzung > 90 bis 98 Masse-% Ethylen-/2 bis < 10 Masse-% C₃- bis C₈-Olefineinheiten (LLDPE) und/oder > 75 bis 90 Masse-% Ethylen-/10 bis < 25 Masse-% C₄- bis C₈-Olefineinheiten (EOP) 0,1 bis 5 Masseteile eines Säuremonomers bzw. Säuremonomergemischs aus der Gruppe der α,ß-ethylenisch ungesättigten Mono- und Dicarbonsäuren bzw. ihrer Anhydride - allein oder als Mischung mit 0,05 bis 5 Masseteilen mindestens eines Comonomers aus der Gruppe der Vinylaromaten und/oder der (Meth-)Acrylsäureester der primären C₁- bis C₁₂-Alkohole - hinzugefügt und in Gegenwart von 0,001 bis 5 Masseteilen eines radikalbildenden Initiators mit einer 1-Stunde-Halbwertszeittemperatur (1_{HW/1h}) von 70 bis 140 °C bis zu einem auf die vorgelegte Ethylencopolymermenge bezogenen Säuremonomeranteil (Carboxylierungsgrad) von 0,05 bis 1,5 Masse-%, vorzugsweise von 0,1 bis 1,2 Masse-%, bei Reaktionstemperaturen zwischen 50 und 130 °C, vorzugsweise zwischen 60 und 120 °C, gepfropft worden sind und
anschließend in einer 2. Stufe
100 Masseteile des in der 1. Festphasenpfropfstufe carboxylierten Ethylencopolymers nach Zumischung von 20 bis 500 Masseteilen eines unmodifizierten Ethylencopolymers der Zusammensetzung 50 bis 75 Masse-% Ethylen-/25 bis 50 Masse-% C₄- bis C₈-Olefineinheiten (EOR) sowie 0,5 bis 60 Masseteilen eines Säuremonomers - allein oder als Mischung mit 0,05 bis 30 Masseteilen eines aus der Gruppe der Vinylaromaten - und 0,01 bis 12 Masseteilen eines radikalbildenden Initiators aus der Gruppe der organischen Peroxide mit einer 1-Stunden-Halbwertszeittemperatur (T_{HW/1h}) zwischen 100 und 200 °C in der Schmelze bei Massetemperaturen zwischen 180 und 280 °C, vorzugsweise zwischen 200 und 260 °C. bis zu einem Carboxylie-rungsgrad von 0,2 bis 5 Masse-%, vorzugsweise von 0,3 bis 4 Masse-%, umgesetzt worden sind und
in einer nachfolgenden 3. Stufe
1 bis 60 Masseteile, vorzugsweise 3 bis 30 Masseteile, des in der 2. Stufe erhaltenen Pfropfproduktes - allein oder in Form einer Mischung mit einem unmodifizierten Ethylencopolymer der Zusammensetzung 50 bis 75 Masse-% Ethylen-/25 bis 50 Masse-% C₄- bis C₈-Olefineinheiten (EOR), wobei der Anteil an unmodifiziertem EOR bis maximal 80 Masse-%, bezogen auf die aus dem Pfropfprodukt der 2. Stufe und unmodifiziertem EOR bestehende Gesamtmenge, betragen kann - in einem Extruder mit 40 bis 99 Masseteilen, vorzugsweise 70 bis 97 Masseteilen Polyamid bei einer Massetemperatur zwischen 180 und 320 °C, vorzugsweise zwischen 200 und 290 °C, compoundiert worden sind.

Als schlagzäh auszurüstende Polyamide (PA) können in den erfindungsgemäßen Formmassen die linearen und partiell aromatischen teilkristallinen sowie amorphen thermoplastisch verarbeitbaren PA mit einer relativen Viskosität von 2 bis 5, vorzugsweise 2,2 bis 4,5 (gemessen an einer einprozentigen Lösung in Kresol oder in 96-prozentiger Schwefelsäure bei 23 °C) eingesetzt werden.

Neben den wichtigsten verwendbaren linearen teilkristallinen Polyamiden (PA), insbesondere Polycaprolactam (PA 6), Polyhexamethylenadipinamid (PA 6.6), Polyundecanolactam (PA 11), Polylaurinlactam (PA 12), Polyhexamethylenazelainamid (PA 6.9), Polyhexamethylensebacinamid (PA 6.10), Polytetramethylenadipinamid (PA 4.6), Polyhexamethylendodecanamid (PA 6.12), können auch Mischungen dieser PA oder Copolyamide, bevorzugt solche, die sowohl Einheiten von ε-Caprolactam als auch Einheiten von Hexamethylendiamin und Adipinsäure besitzen (PA 6.6/6), gegebenenfalls als Dicarbonsäure zumindest teilweise eine aromatische Säure wie Terephthal- und/oder Isophthalsäure (PA 6/6T, PA 6.6/6T, PA 6.6/6I, PA 6.6/6/6T), eingesetzt werden.

Auch die durch Umsetzung von Terephthal- oder Isophthalsäure bzw. Mischungen aus diesen beiden Säuren mit Hexamethylendiamin erhaltenen amorphen PA, wie Polytrimethylhexamethylenterephthalamid (PA 6-3-T), Polyhexamethylenisophthal-amid (PA 6I) und das entsprechende Polycokondensat (PA 6IT), sind ebenso wie die durch Umsetzung von aliphatischen Dicarbonsäuren, insbesondere Adipinsäure, mit äquimolaren Mengen an aromatischen Diaminen, insbesondere m-Xylylen-diamin, erhaltenen teilkristallinen partiell aromatischen Polyamide (Polyarylamide), wie z. B. Poly(m-xylylenadipinamid) (PA XMD6), als Komponente der erfindungsgemäßen Formmassen verwendbar.

Bevorzugte Polyamide sind PA 6, PA 6.6, Copolyamide PA 6.6/6, PA 4.6, PA 11 und PA 12, einschließlich ihrer Mischungen untereinander.

Für die Carboxylierung sind aus der Gruppe der linearen Ethylen/α,β-ethylenisch ungesättigten C₃- bis C₁₂-Olefin-Copolymere als Pfropfsubstrate für die Festphasenpfropfstufe vorzugsweise solche mit 2 bis maximal 10 Masse-% C₃- bis C₈-Olefin-einheiten (LLDPE) und/oder 10 bis maximal 25 Masse-% C₄- bis C₈-Olefin-, insbesondere Buten-, Hexen- und/oder Octeneinheiten (EOP), sowie für die Schmelzepfropfstufe vorzugsweise solche mit 25 bis 50 Masse-% C₄- bis C₈-Olefin- (EOR), insbesondere 1-Octeneinheiten (EOR*), geeignet.

Die Steuerung des Gehalts an C₄- bis C₈-Olefin in den statistischen Ethylencopolymeren wird durch die gezielte Anordnung der Comonomere in der Polymerkette mittels Katalysatoren mit einheitlichen aktiven Zentren, insbesondere durch die sogenannte Constrained Geometry Catalyst (CGC) Technology von The Dow Chemical Company, auf der Grundlage spezieller Metallocen-Katalysator-Systeme erreicht (EP 0416815 B1, US 5.703.187, US 5.872.201).

Die für die Carboxylierung verwendeten Ethylencopolymere, vorzugsweise Ethylen (50-75 Masse-%)/1-Octen (25-50 Masse-%)-Copolymere (EOR*), werden außerdem in unmodifizierter Form mit einem auf die gesamte (carboxylierte plus unmodifizierte) E-thylencopolymermasse bezogenen Anteil bis maximal 80 Masse-% , als Zusatzkomponente - entweder separat und/oder zusammen mit dem in der 2. Pfropfstufe erhaltenen carboxylierten Ethylencopolymer und/oder mit dem zu modifizierendem PA, gegebenenfalls in Form eines PA-Vorcompounds, eingeführt - für die 3. Prozessstufe, der PA-Compoundierung, verwendet.

Als Säuremonomere werden α,ß-ethylenisch-ungesättigte Monound Dicarbonsäuren, wie besonders (Meth)Acryl- oder Fumarsäure, und Säureanhydride, wie besonders Malein- und Itaconsäureanhydrid, eingesetzt. Bevorzugte Säuremonomere sind Acrylsäure (AS) und besonders Maleinsäureanhydrid (MSA).

Die Säuremonomere können auch als Mischung mit einem Comonomer aus der Gruppe der Vinylaromaten und/oder der C₁- bis C₁₂-Alkylester der Acryl- oder Meth-acrylsäure entsprechend Zusammensetzungen 100-20 Masse-% Säure- und 0-80 Masse-% Comonomer, vorzugsweise 90-30 Masse-% Säure- und 10-70 Masse-% Comonomer, in der ersten Pfropfstufe und gegebenenfalls mit Vinylaromaten in gleichen Säure-/Comonomer-Zusammensetzungen auch in der zweiten Pfropfstufe eingesetzt werden.

Als Comonomere werden besonders Styrol und/oder α-Methylstyrol und/oder Ethyl-acrylat (EA) und/oder n-Butylacrylat (BA) und/oder Methylmethacrylat (MMA), verwendet. Styrol ist das bevorzugte Comonomer.

Für eine Reihe von Anwendungsfällen haben sich "(Co)Pfropf"-Anteile mittels Verwendung von Säuremonomer/Comonomer-Mischungen, insbesondere MSA/Styrol- oder auch AS/Styrol-Zusammensetzungen, für die Steuerung spezieller Pfropfprodukteigenschaften als vorteilhaft erwiesen.

Die radikalisch initiierte Pfropfreaktion wird zwecks Erreichung von in beiden Pfropfprozessstufen ausreichenden Carboxylierungsgraden sowie einer gleichmäßigen Pfropfung vorteilhaft unter Verwendung eines Radikalbildners, insbesondere eines organischen peroxygruppenhaltigen Initiators mit einer Halbwertstemperatur nach einer Stunde bzw. nach einer Minute (gemessen in 0,1 molarer Monochlorbenzol-Lösung) T_{HW/1h} zwischen 70 und 200 °C bzw. T_{HW/1min} zwischen 100 und 240 °C, in einer auf das Ethylen(co)polymer-Rückgrat bezogenen Konzentration zwischen 0,001 und 10 Masse-%, vorzugsweise zwischen 0,005 und 2 Masse-%, durchgeführt.

Ausgewählte Beispiele für verwendbare Radikalbildner sind Dilauroylperoxid (DLPO) mit einer 1-Stunde-Halbwertszeittemperatur (T_{HW/1h}) von 79 °C, Dibenzoylperoxid (DBPO) mit T_{HW/1h} von 91 °C, tert.-Butylperoxy-2-ethylhexanoat (TBPEH) mit T_{HW/1h} von 91 °C, tert.-Butylperoxy-isobutyrat (TBPIB) mit T_{HW/1h} von 98 °C, 1,1-Di-(tert.-butylperoxy)-cyclohexan (DTBPC) mit T_{HW/1h} von 113 °C, tert.-Butylperbenzoat (TBPB) mit T_{HW/1h} von 122 °C, Dicumylperoxid (DCP) mit T_{HW/1h} von 132 °C bzw. T_{HW/1min}von 172 °C, 2,5-Dimethyl-2,5-di(tert.-butylperoxy)hexan (DHBP) mit T_{HW/1h} von 134 °C bzw. T_{HW/1min}von 174 °C, 2,5-Dimethyl-2,5-di(tert.butylperoxy)hexin-(3) (DYBP) mit T_{HW/1h} von 141 °C bzw. T_{HW/1min} von 184 °C, Di-tert.-butylperoxid (TBP) mit T_{HW/1h} von 141 °C bzw. T_{HW/1min} von 183 °C, Cumolhydroperoxid (CHP) mit T_{HW/1h} von 166 °C bzw. T_{HW/1min} von 222 °C und tert.-Butylhydroperoxid (TBHP) mit T_{HW/1h} von 185 °C bzw. T_{HW/1min} von 227 °C.

Während in der fest-fluiden 1. Pfropfstufe für Reaktionstemperaturen zwischen ca. 50 und ca. 130 °C besonders DLPO, DBPO, TBPEH, TBPIP, DTBPC und TBPB geeignete Radikalbildner sind, werden in der schmelz-flüssigen 2. Pfropfstufe bei Massetemperaturen zwischen ca. 180 und ca. 280 °C und Verweilzeiten zwischen ca. 0,5 und ca. 2 min besonders DCP, DHBP, DYBP, TBP, CHP und TBHP als Initiatoren eingesetzt.

Bevorzugt werden Polymerisationsmischungen aus MSA und/oder AS als Säuremonomer, gegebenenfalls - besonders in der ersten Pfropfstufe - Säuremonomer/Co-monomer (vorzugsweise Styrol)-Mischungen mit einem Anteil bis maximal 80 Masse-% Comonomer, und Radikalbildner entsprechend einem für beide Pfropfcarboxylierungsstufen zu wählenden Masseverhältnis aus einzusetzendem(n) Monomer(en) (Säure- plus Comonomer) und Radikalbildner zwischen 200 und 0,2, vorzugsweise zwischen 50 und 1, verwendet.

Weiterer Gegenstand der vorliegenden Erfindung ist ein Verfahren zur Herstellung schlagzäher Polyamid-Formmassen der Zusammensetzung 40 bis 99 Masse-% eines thermoplastischen Polyamids und 1 bis 60 Masse-% einer Ethylencopolymer(blend)-Komponente, wonach in einer 1. Stufe (Festphasenpfropfstufe)
auf 100 Masseteile fest-fluides partikuläres Ethylencopolymer der Zusammensetzung > 90 bis 98 Masse-% Ethylen-/2 bis < 10 Masse-% C₃- bis C₈-Olefineinheiten (LLDPE) und/oder> 75 bis 90 Masse-% Ethylen-/10 bis < 25 Masse-% C₄- bis C₈-Olefineinheiten (EOP) 0,1 bis 5 Masseteile eines Säuremonomers bzw. Säuremonomergemischs aus der Gruppe der α,β-ethylenisch ungesättigten Mono- und Dicarbonsäuren bzw. ihrer Anhydride - *allein oder als Mischung mit 0,05 bis 5 Masseteilen mindestens eines Comonomers aus der Gruppe der Vinylaromaten und*/*oder der (Meth-)Acrylsäureester der primären C₁*- *bis C₁₂*-*Alkohole* - hinzugefügt und in Gegenwart von 0,001 bis 5 Masseteilen eines radikalbildenden Initiators mit einer 1-Stunde-Halbwertszeittemperatur (T_{HW/1h}) von 80 bis 140 °C bis zu einem auf die vorgelegte Ethylencopolymermenge bezogenen Säuremonomeranteil (Carboxylierungsgrad) von 0,05 bis 1,5 Masse-% bei Reaktionstemperaturen zwischen 50 und 130 °C gepfropft werden
und anschließend in einer 2. Stufe (Schmelzepfropfstufe) 100 Masseteile des in der 1. Festphasen-Pfropfstufe carboxylierten Ethylencopoly-mers nach Zumischung von 20 bis 500 Masseteilen eines unmodifizierten Ethylencopolymers der Zusammensetzung 50 bis 75 Masse-% Ethylen-/25 bis 50 Masse-% C₄- bis C₈-Olefineinheiten (EOR) sowie 0,5 bis 60 Masseteilen eines Säuremonomers - *allein oder als Mischung mit 0,05 bis 30 Mas* *seteilen eines aus der Gruppe der Vinylaromaten ausgewählten Comonomers* - und 0,01 bis 12 Masseteilen eines radikalbildenden Initiators aus der Gruppe der organischen Peroxide mit einer 1-Stunden-Halbwertszeittemperatur (T_{HW/1h}) zwischen 100 und 200 °C in der Schmelze bei Massetemperaturen zwischen 180 und 280 °C bis zu einem Carboxylierungsgrad von 0,2 bis 5 Masse-% umgesetzt werden und
in einer nachfolgenden 3. Stufe (Compoundierstufe)
1 bis 60 Masseteile des in der 2. Stufe erhaltenen Pfropfproduktes - allein oder in Form einer Mischung mit einem unmodifizierten Ethylencopolymer der Zusammensetzung 50 bis 75 Masse-% Ethylen-/25 bis 50 Masse-% C₄- bis C₈-Olefineinheiten (EOR), wobei der Anteil an unmodifiziertem EOR bis maximal 80 Masse-%, bezogen auf die aus dem Pfropfprodukt der 2. Stufe und unmodifiziertem EOR bestehende Gesamtmenge, betragen kann - in einem Extruder mit 40 bis 99 Masseteilen Polyamid bei einer Massetemperatur zwischen 180 und 320 °C compoundiert werden.

Eine bevorzugte Ausführungsform zur Herstellung schlagzäher Polyamid-Form-massen besteht darin, dass in einer 1. Stufe
auf 100 Masseteile pulveriges und/oder körniges und/oder granulares und/oder in anderer partikulärer Form vorliegendes Ethylencopolymer der Zusammensetzung > 90 bis 98 Masse-% Ethylen-/2 bis < 10 Masse-% C₃- bis C₈-Olefineinheiten (LLDPE) 0,2 bis 4 Masseteile MSA - *allein oder als Mischung mit einem auf die Gesamtmonomermasse bezogenen Comonomeranteil von maximal 50 Masse-% Styrol -* hinzugefügt und in Gegenwart von 0,005 bis 2 Masseteilen eines radikalbildenden Initiators mit einer 1-Stunde-Halbwertszeittemperatur (T_{HW/1h}) zwischen 80 und 140 °C bis zu einem auf die vorgelegte LLDPE-Menge bezogenen MSA-Anteil (Carboxylierungsgrad) von 0,1 bis 1,2 Masse-% bei Reaktionstemperaturen zwischen 60 und 120 °C gepfropft werden und in einer 2. Stufe
100 Masseteile des in der 1. Festphasenpfropfstufe carboxylierten LLDPE nach Zumischung von 20 bis 500 Masseteilen eines unmodifizierten Ethylencopolymers der Zusammensetzung 50 bis 75 Masse-% Ethylen-/25 bis 50 Masse-% 1-Octeneinhei-ten (EOR*) sowie von 0,6 bis 30 Masseteilen MSA und 0,01 bis 10 Masseteilen eines radikalbildenden Initiators aus der Gruppe der organischen Peroxide mit einer 1-Stunden-Halbwertszeittemperatur (T_{HW/1h}) zwischen 100 und 200 °C in der Schmelze bei Massetemperaturen zwischen 200 und 260 °C bis zu einem Carboxylierungsgrad zwischen 0,3 und 4 Masse-% umgesetzt werden und
in einer nachfolgenden 3. Stufe
3 bis 30 Masseteile des in der 2. Stufe erhaltenen Pfropfproduktes - allein oder in Form einer Mischung mit einem unmodifizierten EOR*, wobei der Anteil an unmodifiziertem EOR* bis zu maximal 80 Masse-%, bezogen auf die aus dem Pfropfprodukt der 2. Stufe und unmodifiziertem EOR* bestehende Gesamtmenge betragen kann - zusammen mit 70 bis 97 Masseteilen eines unter PA 6, PA 6.6, Co-PA 6.6/6, PA 12 und PA 11, einschließlich ihrer Mischungen untereinander, ausgewählten Polyamids in einem Extruder bei einer Massetemperatur zwischen 200 und 290 °C compoundiert werden.

Der Vorteil der mittels erfindungsgemäßem Prozess erhaltenen schlagzäh modifizierten Polyamide gegenüber den - entweder mit "reinen" Schmelze- oder mit einstufigen Festphasen-Pfropfmodifikatoren unter Verwendung analoger Ethylen(co)polymerrückgrate - ausgerüsteten PA-Formmassen, besteht im deutlich höheren Anstieg der Schlagzähigkeit und anderer mechanischer Kennwerte bei gleichzeitiger Sicherung einer hohen Wirtschaftlichkeit, die besonders ausgeprägt ist, wenn als 3. Stufe die reaktive PA/Schlagzähmodifikator-Compoundierung entweder im gleichen Carboxylierungsextruder unmittelbar nach der 2. Pfropfstufe oder in einem direkt nachgeschalteten zweiten Extruder durchgeführt wird.

Die hohe Schlagzähwirkung des carboxylierten Ethylencopolymer(blend)s basiert auf dem in der 1. Pfropfstufe einfach zu steuernden Festphasenprozess bei gleichzeitiger Erreichung hoher Monomerumsätze (sehr geringe Monomer-Restanteile) sowie der überraschend guten Eignung der in der Festphase carboxylierten Ethylencopolymere als Vorprodukte für die in der zweiten Stufe durchzuführende Schmelze-Funktionalisierung. Die auf diese Weise erhaltenen hoch-carboxylierten Ethylencopolymeren bzw. Ethylencopolymerblends weisen keine sich nachteilig auswirkenden Veränderung der Ethylencopolymerstruktur, z. B. eine hochgradige Vernetzung oder gegebenenfalls auch Degradationdefekte, auf.

Die erfindungsgemäße schlagzähe Polyamid-Formmasse wird durch nachfolgende Beispiele erläutert, ohne darauf beschränkt zu sein.

### 1. Stufe (Festphasenpfropfstufe)

### Beispiel 1

In einen temperierbaren, mit einer Rührvorrichtung ausgerüsteten 0,2 m³-Reaktor (Länge/Durchmesser-Verhältnis: 1,5 zu 1) werden 100 Masseteile eines pulverigen, linearen Polyethylens der Zusammensetzung 96 Masse-% Ethylen-/4 Masse-% 1-Octeneinheiten (C₈) mit einer Dichte von 0,925 g/cm³, einer Schmelzflussrate MFR (190 °C/2,16 kg) von 47 g/10 min und einem mittleren Teilchendurchmesser d_{T} von 0,21 mm (LLDPE-1) als Pfropfsubstrat zusammen mit 0,25 Masseteilen Dilauroylperoxid (DLPO) als Radikalbildner bei einer Reaktorinnentemperatur von 23 °C vorgelegt und anschließend in Stickstoff-Atmosphäre bei einer Rührgeschwindigkeit von 80 min⁻¹ insgesamt über eine Dispergierzeit t_{D} von 15 min unter gleichzeitiger Temperaturerhöhung auf T_{D} von 30 °C vermischt, woraufhin mittels Vakuum-Anlegung die Restfeuchte vollständig entfernt wird.

Danach worden bei 30 °C 2.4 Masseteile MSA und 1,2 Masseteile Styrol (S) hinzugefügt, die Rührerdrehzahl auf 350 min⁻¹ erhöht und die unter Stickstoff stehende Reaktionsmischung innerhalb einer Aufheizzeit t _{A} von 30 min auf eine Reaktionstemperatur T_{R1} von 87 °C gebracht.

Unter weiterer Temperaturerhöhung sowie Verringerung der Rührerdrehzahl auf 250 min⁻¹ wird nach einer Reaktionszeit t_{R1}=30 min die Endreaktionstemperatur T_{R2} von 96 °C erreicht, bei der über eine Reaktionszeit t_{R2}=30 min unter Rührung von 250 min⁻¹ die Pfropfung erfolgt. Die Reaktion wird daraufhin beendet, indem - nach Reduzierung der Rührgeschwindigkeit auf 80 min⁻¹mittels Durchleiten von Stickstoff durch die fest-fluide Reaktionsproduktmasse nicht umgesetztes MSA und flüchtige Reaktionsnebenprodukte ausgetrieben werden.

Nach einer Desorptionszeit t_{Des} von 30 min wird das ca. 90 °C heiße Reaktionsprodukt in einen Kühlmischer geführt, woraus es nach Abkühlung auf ca. 50 °C in den Vorratsbehälter gelangt und für die nachfolgende Schmelze-Maleinierungsstufe bereitgehalten wird.

Von dem Festphasenpfropfprodukt sind folgende Kennwerte ermittelt worden:
- Auswaage des Reaktionsproduktes
- Gehalt an Carbonsäure, berechnet auf Masse-% MSA, mittels Rücktitration der durch den Maleinsäureanteil nicht neutralisierten Kalilauge, indem eine 2 g-Probe der Auswaage 6 h mit einer Mischung aus 100 ml wasser-gesättigtem Xylol und 20 ml 0,1-molarer methanolischer Kalilauge bei 80 °C behandelt und nach Zugabe einiger Tropfen einer 1%-igen methanolischen Phenolphthaleinlösung mit 0,1-molarer Salzsäure titriert wird:
   - für die (getrocknete) Auswaage den MSA-Masseanteil CS in Masse-%
   - für den im siedenden Methanol erhaltenen Rückstand, d. h. den vom Polymer-Rückgrat chemisch gebundenen ("gepfropften") MSA-Masseanteil CSₑₓ, der sogenannte Carboxylierungs- bzw. Maleinierungsgrad, in Masse-% sowie
   - aus dem Extrakt der ermittelte Masseanteil an "ungebundener" Carbonsäure (in Form eines oligomeren MSA-Peroxid-Reaktionsproduktes) P(MSA)ₑₓ
- Schmelzflussrate (MFR) nach ISO 1133 (190 °C/2,16 kg Auflagegewicht)

Folgende Kennwerte werden für das maleinierte LLDPE (Beispiel-Nr. 1) erhalten:

| | |
|---|---|
| Auswaage | 103,21 Masseteile |
| Carbonsäuregehalt CS | 1,21 Masse-% |
| Carboxylierungsgrad CSₑₓ | 1,05 Masse-% |
| ungebundene Carbonsäure P(MSA)ₑₓ | 0,11 Masse-% |
| MFR (190 °C /2,16 kg) | 10 g/10 min |

### Beispiele 2 bis 11

Entsprechend der in Beispiel 1 beschriebenen Prozessführung werden unter Verwendung der nachfolgenden pulverförmigen Ethylencopolymer-Rückgrate
LLDPE-1: Dichte=0,925 g/cm³, MFR (190°C/2,16 kg)=47 g/10 min
LLDPE-2: Dichte=0,920 g/cm³, MFR (190°C/2,16 kg)=25 g/10 min
LLDPE-3: Dichte=0,934 g/cm³, MFR (190°C/2,16 kg)=7 g/10 min
EOP* (C₈-Anteil=22 Ma.-%): Dichte=0,902 g/cm³, MFR (190°C/2,16 kg)=30 g/10 min
mit einem der unten genannten Initiatoren, einem Funktionsmonomer (FM: MSA, AS) und zumeist einem Comonomer (CM: S, MMA oder BA) in unterschiedlichen Konzentrationen weitere carboxylierte Ethylencopolymere hergestellt. Während das gemäß Beispiel 1 verwendete Dispergier-/Inertisierungs- und Aufheizregime entsprechend t_{D}= (15 ± 5) min, T_{D}= (30 ± 5) °C und t_{A}= (25 ± 10) min, einschließlich die gleiche Reaktionskomponenten-Zuführung, gewählt worden ist, sind als wesentliche Pfropfbedingungen die Reaktionstemperatur(en) und die Monomer/Initiator-Verhältnisse variiert worden.

Der auf jeweils 100 Masseteile Pfropfprodukt bezogene, in Masse-% (Ma.-%) angegebene Carboxylierungsgrad CSₑₓ - ermittelt entsprechend der im Beispiel 1 für die MSA-Titration beschriebenen analytische Säurebestimmung - ist auch bei Verwendung von AS als Säuremonomer (FM) bestimmt worden (Angabe in Ma.-% AS).

Als Radikalbildner sind DLPO und DBPO verwendet worden.

In Tabelle 1 sind als Verfahrensparameter aufgeführt:
- Beispiel-Nummer und eingesetztes Rückgratpolymer (Spalte 1)
- Art und Konzentration des verwendeten Initiators, in Ma.-% (Spalten 2 und 3)
- FM (MSA, AS) mit Konzentrationsangabe, in Ma.-% (Spalte 4)
- CM (S, MMA und BA) mit Konzentrationsangabe, in Ma.-% (Spalte 5)
- Reaktionszeiten (t_{R1}, t_{R2}), in min (Spalte 6)
- Reaktionstemperaturen (T_{R1}, T_{R2}), in °C (Spalte 7)
- Schmelzflussrate MFR (190 °C/2,16 kg), in g/10 min (Spalte 8)
- Carboxylierungsgrad CSₑₓ, in Ma.-% (Spalte 9)

Zum Vergleich sind in Tabelle 1 zwei Beispiele für carboxylierte Ethylencopolymere, die mittels zwei hintereinander folgenden Festphasen-Pfropfungen hergestellt worden sind (Vgl.4A-2St. und Vgl.5A-2St.), aufgeführt. Die Vergleichsbeispiele zeigen eindeutig, dass es nicht gelingt, den Carboxylierungsgrad des eingesetzten LLDPE's durch eine 2. Festphasenpfropfstufe noch wesentlich zu erhöhen.

**Tabelle 1**

| Bspl.-Nr. Rückgrat | Initiator-Art | Initiat.-Konz. [Ma-%] | FM [Ma-%] | CM [Ma-%] | t_{R1}/t_{R2} [min] | T_{R1}/T_{R2} [°C] | MFR (190/ 2,16) g/10 min | CSₑₓ Ma-% |
|---|---|---|---|---|---|---|---|---|
| 1 LLDPE-1 | DLPO | 0,25 | 2,4 MSA | 1,2 S | 30/30 | 87/96 | 10 | 1,05 |
| 2 LLDPE-2 | DBPO | 0,1 | 1,7 MSA | 1,2 S | 20/35 | 90/108 | 5 | 0,79 |
| 3 LLDPE-2 | DLPO | 0,1 | 2,1 MSA | 1,5 S | 25/35 | 86/106 | 11 | 0,91 |
| 4 LLDPE-3 | DBPO | 0,5 | 1,4 MSA | 1,6 S | 20/30 | 90/106 | 190/10:4 | 0,76 |
| Vg1.4A-2St. | DBPO | 0,5 | 1,4 MSA | 1,6 S | 20/35 | 88/95 | | 0,71 |
| LLDPE-3 | DBPO | 0,2 | 1,2 MSA | 1,2 S | 50 | 105 | 190/10:1 | 1,15 |
| 5 LLDPE-3 | DLPO | 0,25 | 2,4 MSA | 1,2 S | 30/30 | 96 | 3 | 1,01 |
| Vgl.SA-2St. | DLPO | 0,25 | 2,4 MSA | 1,2 S | 30/30 | 85/95 | 9 | 1,02 |
| LLDPE-1 | DLPO | 0,2 | 2,1 MSA | | 30 | 96 | 4 | 1,30 |
| 6 LLDPE-1 | DLPO | 0,8 | 2,1 MSA | | 30/30 | 90/95 | 2,5 | 0,90 |
| 7 LLDPE-2 | DLPO | 0,1 | 2,1 AS | 1 BA | 25/35 | 86/98 | 2 | 1,5 |
| 8 LLDPE-3 | DLPO | 0,1 | 2,1 AS | 1 MMA | 20/35 | 85/95 | 3,5 | 1,4 |
| 9 LLDPE-1 | DLPO | 1,0 | 2,1 AS | 0,5 S | 35/30 | 82/94 | 1 | 1,25 |
| 10 EOP* | DLPO | 0,7 | 1,7 MSA | 1,8S | 75 | 71/80 | 41 | 0,34 |

### 2. Stufe (Schmelzepfropfstufe)

### Beispiele 11 bis 19

Den in der ersten Carboxylierungsstufe erhaltenen pulverigen Festphasen-Pfropf-produkten wird der für die Schmelzepfropfung spezifische Anteil an Initiator und Säuremonomer hinzugefügt und die erhaltenen pulverigen Vormischungen zusammen mit dem ausgewähltem EOR* - entsprechend Beispiel-Nr.11 mit EOR*-2 (40 Ma.-% C₈-Monomereinheiten) - kontinuierlich einem Doppelschneckenextruder des Typs ZSK 25 (L = 32 D; Temperaturprofil von 160 bis 250 °C) der Firma Werner & Pfleiderer (DSE) in einem entsprechend 20-80 Masseteile Vormischung/80-20 Masseteile unmodifiziertes EOR* eingestellten Masseverhältnis zugeführt und mittels reaktiver Extrusion bei einer Massetemperatur T_{M} zwischen ca. 200 und ca. 240 °C sowie einem mittleren Durchsatz von 10 kg/h umgesetzt.

In der 2. Carboxylierungsstufe werden zusätzlich zu den jeweils verwendeten Pfropf-produkten aus der 1. Stufe nachfolgende Ethylencopolymer-Rückgrate:
EOR*-1 (45 Ma.-% C₈), MFR (190 °C/2,16 kg)= 1 g/10 min, Dichte=0,857 g/cm³
EOR*-2 (40 Ma.-% C₈), MFR (190 °C/2,16 kg)= 30 g/10 min, Dichte=0,870 g/cm³
EOR*-3 (39 Ma.-% C₈), MFR (190 °C/2,16 kg)=0,5 g/10 min, Dichte=0,868 g/cm³
EOR*-4 (38 Ma.-% C₈), MFR (190 °C/2,16 kg)= 5 g/10 min, Dichte=0,870 g/cm³
sowie als Funktionsmonomer MSA (im Beispiel Nr. 16 zusätzlich noch eine geringe Konzentration an Styrol-Comonomer) und als Initiator DHBP oder DYBP eingesetzt.

In Tabelle 2 sind aufgeführt:

| | |
|---|---|
| Spalte 1: | Beispiel-Nummer und das zuvor in der 1. Stufe als Rückgrat verwendete Ethylencopolymer |
| Spalte 2: | Konzentration des eingesetzten Festphasen-Vorpfropfproduktes gemäß Tabelle 1 (Angabe der entsprechende Bspl.-Nr./Tabelle 1 bzw. für Vergleichsbeispiele 11, 13 und 18: Schmelzepfropfrodukt der 1. Stufe), in Ma.-%, bezogen auf die Masse des Ansatzes der Schmelze-Pfropfstufe |
| Spalte 3: | für die Schmelze-Pfropfstufe verwendeter Initiator, in Ma.-%, bezogen auf die Masse des Ansatzes der Schmelze-Pfropfstufe |
| Spalte 4: | für die Schmelze-Pfropfstufe verwendete Monomere (FM und CM), in Ma.-%, bezogen auf die Masse des Ansatzes der Schmelze-Pfropfstufe |
| Spalte 5: | in DSE zugeführtes unmodifiziertes EOR*, in Ma.-%, bezogen auf den Ansatz der Schmelze-Pfropfstufe (Vormischung + EOR*) |
| Spalte 6: | Massetemperatur im DSE (T_{M}) bei einem Durchsatz von 10 kg/h, in °C |
| Spalte 7: | Schmelzflussrate MFR (190 °C/5 kg), in g/10 min [g/10 '] |
| Spalte 8: | gepfropfter MSA-Gehalt (Carboxylierungsgrad) CSₑₓ, in Ma.-% |

Zum Vergleich werden - ohne Vorlage eines in der Festphase vorgepfropften Ethylen(co)polymers doppelt gepfropfte Schmelzepfropfprodukte hergestellt (s. Beispiele Vg1.11A, Vg1.13A und Vg1.18A mit entsprechenden A₁- und A₂-Stufen), die gegenüber den erfindungsgemäßen Pfropfprodukten deutlich geringere Funktionalisierungsgrade und gleichzeitig höhere Vernetzungsgrade (geringere MFR-Werte) aufweisen.

**Tabelle 2**

| Bspl.-Nr. | Vormischung für Extruderbeschickung | | | Reaktive Extrusion | | Kennwerte | |
|---|---|---|---|---|---|---|---|
| In 1. Stufe eingesetztes Ethylenpolymer | Vorpfropfprodukt [Ma.-%] Nr.Tab.1 | Initiator [Ma.-%] | FM [Ma.-%] | Rückgrat [Ma.-%] | T_{M} [°C] | MFR (190/5) [g/10'] | CSₑₓ [Ma.-%] |
| 11 LLDPE-2 | 17,3 Nr.2 | 0,07 DHBP | 2,8 MSA | 80 EOR*-2 | 207 | 9 | 1,70 |
| Vgl. 11 A₁ | | 0,07 DHBP | 2,8 MSA | 97,13 EOR*-2 | 207 | 6 | 0,74 |
| Vgl. 11 A₂ | 17,13 | 0,07 DHBP | 2,8 MSA | 80 EOR*-2 | 207 | 3 | 1,18 |
| LLDPE-2 | Vgl.11 A₁ | | | | | | |
| 12 LLDPE-2 | 17,13 Nr.3 | 0,07 DHBP | 2,8 MSA | 80 EOR*-4 | 219* | 1,3 | 2,06 |
| 13 LLDPE-2 | 17,13 Nr.3 | 0,07 DHBP | 2,8 MSA | 80 EOR*-3 | 225 | 1,2 | 2,60 |
| Vgl. 13 A₁ | | 0,07 DHBP | 2,8 MSA | 97,13 EOR*-3 | | 0,5 | 0,65 |
| Vgl. 13 A₂ | 17,13 | 0,07 DHBP | 2,8 MSA | 80 EOR*-3 | | 0,1 | 1,05 |
| LLDPE-2 | Vgl.13 A₁ | | | | | | |
| 14 LLDPE-1 | 17,13 Nr.1 | 0,07 DHBP | 2,8 MSA | 80 EOR*-3 | 240 | 4,1 | 1.98 |
| 15 LLDPE-3 | 17,13 Nr.4 | 0,07 DHBP | 2,8 MSA | 80 EOR*-1 | 221 | 1,0 | 2,11 |
| 16 LLDPE-2 | 76,7 Nr.3 | 1,0 DHBP | 2,1 MSA+ 0,2 S | 20 EOR*-3 | 212 | 5,6 | 1,87 |
| 17 LLDPE-3 | 47,13 Nr.5 | 0,1 DHBP | 2,8 MSA | 50 EOR*-3 | 210 | 5,5 | 1,85 |
| 18 LLDPE-1 | 57,1 Nr.6 | 0,1 DHBP | 2,8 MSA | 40 EOR*-4 | 212 | 1,6 | 1,88 |
| Vgl. 18 A₁ | | 0,1 DHBP | 2,1 MSA | 97,8LLDPE-1 | 218 | 1,2 | 0,66 |
| Vgl.18 A₂ | 57,03 | 0,07 DHBP | 2,9 MSA | 40 EOR*-4 | 213 | 0,3 | 1,15 |
| LLDPE-1 | Vgl. 18 A₁ | | | | | | |
| 19 POE | 17,13 Nr. 10 | 0,07 DHBP | 2,8 MSA | 80 EOR*-3 | 206# | 12 | 0,79 |

| | | | | | | | |
|---|---|---|---|---|---|---|---|
| ^{#)} Durchsatz: 20 kg/h | | | | | | | |

### 3. Stufe (Compoundierstufe)

### Beispiele 20 bis 39

Die nach der Schmelzepfropfung gemäß Tab. 2 unter Bsp.-Nr. 11-15 hergestellten carboxylierten Ethylencopolymerblends werden für die PA-Schlagzähausrüstung verwendet. Die Compoundierung erfolgt im o. a. DSE mit einem durchschnittlichen Durchsatz von 10 kg/h bei einer mittleren Verweilzeit von ca. 40-50 sec unter kontinuierlicher Zuführung von PA 6 mit folgender Charakteristik
- relative Viskosität (ηᵣₑₗ, gemessen an einer einprozentigen Lösung in 96%-iger Schwefelsäure bei 23 °C gemäß DIN 53 727) von 2,6 und MFR (230 °C/5 kg) von 60 g/10 min
   oder von PA 6.6 mit folgender Charakteristik
- ηᵣₑₗ = 2,8 und MFR (275 °C/5 kg) = 33 g/10 min sowie einem der unter Bspl.-Nr. 11-15 in Tabelle 2 genannten Pfropfprodukte, die gegebenenfalls mit weiterem unmodifizierten EOR* "verdünnt" worden sind (Angaben gemäß den Beispielen in Tabelle 3/Spalte 3), entsprechend Gesamtmasseanteilen von 6, 10 und 15 Masse-% (unmodifiziertes plus funktionalisiertes) Ethylencopolymer (blend) im PA-Blend, einschließlich des Zusatzes eines Antioxydans (0,2 Masse-% Irganox B 215 von Ciba-Geigy).

In den Beispielen Nr. 30, 35, 36 und 39 ist ein dem Schmelzepfropfprodukt entsprechend gleich großer bzw. der 1,5-fache Anteil an unmodifiziertem EOR* zusammen mit dem PA in den DSE eingeführt und compoundiert worden.

In Tabelle 3 sind aufgeführt:

| | |
|---|---|
| Spalte 1: | Nummer des Beispiels und verwendeter Polyamid-Typ (PA 6 oder PA 6.6) |
| Spalte 2: | Polyamid-Anteil in [Ma.-%] und Angabe des gegebenenfalls hinzugesetzten unmodifizierten EOR*, wenn ein solcher Zusatz - ohne Vorcompoundierung mit dem carboxylierten Ethylencopolymer (Schmelze-Pfropfprodukt) - zusammen mit dem PA in den DSE hinzugefügt worden ist. |
| Spalte 3: | in den DSE zugeführter Anteil an modifiziertem Ethylencopolymer (Mod. Tab. 2) bzw. Mischung aus carboxyliertem und unmodifiziertem EOR* in Form eines Vorcompounds aus beiden Ethylencopolymer-Komponenten, in [Ma.-%] |
| Spalte 4: | Massetemperatur (T_{M}) in dem DSE, in [°C] |
| Gemessene Kennwerte: | |
| Spalte 5: | Schmelzflussrate (MFR) für PA 6-Formmassen: 230 °C/5 kg; für PA 6.6-Formmassen: 275 °C/5 kg, in [g/10 min] (nach ISO 1133) |
| Spalte 6: | Biege-E-Modul (E_{b}), in [MPa] (nach ISO 178) |
| Spalte 7: | Charpy-Kerbschlagzähigkeit bei +23 °C, a_{k(23°C)} in [kJ/m²] (nach ISO 179/1eA), wobei ungebrochene Prüfkörper mit "k. B." (kein Bruch) gekennzeichnet werden. |
| Spalte 8: | Charpy-Kerbschlagzähigkeit bei -20 °C, a_{k(20°C)} in [kJ/m²] (ISO 179/1eA) |

**Tabelle 3**

| Beispiel-Nr. PA-Typ | | Anteil PA (+ unmod. EOR*) [Ma.-%] | Anteil Mod. Tab.2 (+unmod. EOR) [Ma.-%] | DSE-Werte: D=10 kg/h T_{M}[°C] | Kennwerte | | | |
|---|---|---|---|---|---|---|---|---|
| | | | | | MFR [g/10'] | E_{b} [MPa] | a_{k(23°C)} [kJ/m²] | a_{k(-20°C)} [kJ/m²] |
| 20 | PA 6 | 100 | - | 240 | 60 | 2520 | 4 | 3 |
| 21 | PA 6 | 85 | 15 Mod.13 | 244 | 5,6 | 1620 | k. B. | 27 |
| Vgl.21A | | | 15 Mod. Vg1.13A₂ | 245 | 21 | 1540 | 65 | 13 |
| | PA 6 | | | | | | | |
| 22 | PA 6 | 90 | 10 Mod.13 | 243 | 14 | 1940 | 71 | 24 |
| 23 | PA 6 | 94 | 6 Mod.13 | 242 | 26 | 2150 | 23 | 16 |
| 24 | PA 6 | 85 | 3,75 Mod. 13 11,25 EOR*-3 | 243 | 30 | 1710 | 58 | 22 |
| 25 | PA 6 | 85 | 6 Mod.13 9 EOR*-3 | 241 | 19 | 1810 | k. B. | 29 |
| Vgl.25A | | | 6 Mod. Vgl.13A₂ 9 EOR*-3 | 242 | 36 | 1650 | 56 | 13 |
| | PA 6 | | | | | | | |
| 26 | PA 6 | 80 | 5 Mod.13 15 EOR*-3 | 240 | 26 | 1510 | 82 | 27 |
| 27 | PA 6 | 90 | 4 Mod.13 6 EOR*-3 | 241 | 26 | 2030 | 42 | 24 |
| 28 | PA 6 | 94 | 3 Mod.13 3 EOR*-3 | 238 | 33 | 2230 | 20 | 15 |
| 29 | PA 6 | 94 | 2,4 Mod.13 3,6 EOR*-4 | 239 | 36 | 2180 | 22 | 16 |
| 30 | PA 6 | 94 (3 EOR*-2) | 3 Mod. 11 | 240 | 41 | 2170 | 19 | 13 |
| 31 | PA 6 | 85 | 6 Mod.12 9 EOR*-4 | 244 | 3,2 | 1890 | 43 | 28 |
| 32 | PA 6 | 90 | 4Mod.12 6 EOR*-4 | 243 | 3,4 | 2060 | 41 | 18 |
| 33 | PA 6 | 94 | 2,4 Mod.12 3,6 EOR*-4 | 238 | 24 | 2220 | 20 | 13 |
| 34 PA 6.6 | | 100 | - | 275 | 33 | 2750 | 3,5 | 2 |
| 35 | PA 6.6 | 90 (6 EOR*-2) | 4 Mod.14 | 272 | 21 | 2150 | 25 | 16 |
| 36 | PA 6.6 | 85 (9 EOR*-4) | 6 Mod.14 | 275 | 12 | 1880 | 65 | 21 |
| 37 | PA 6.6 | 94 | 2,4 Mod.13 3,6 EOR*-3 | 275 | 29 | 2280 | 19 | 14 |
| 38 | PA 6.6 | 90 | 4 Mod.13 6 EOR*-3 | 275 | 26 | 2160 | 33 | 19 |
| Vgl.38A | | 90 | 4 Mod. Vgl. 13 A₂ 6 EOR*-3 | 275 | 29 | 2040 | 25 | 10 A₂ |
| | PA 6.6 | | | | | | | |
| 39 | PA 6.6 | 90 (6 EOR*-3) | 4 Mod.15 | 275 | 17 | 2240 | 27 | 16 |

Der Kennwertvergleich zwischen den mittels zweistufigen Festphasen-/Schmelzepfropfprodukten ausgerüsteten Polyamiden und den mit Beispl.-Nr. Vgl.13 A₂ (übliche Schmelzepfropfung mit zweimaliger MSA-Dosierung) auf gleiche Weise modifiziertem PA 6 (Beispiel 21/Vg1.21A , Beispiel 23/Vg1.23A) bzw. PA 6.6 (Beispiel 38/Vgl. 38A) zeigt, dass die erfindungsgemäß carboxylierten Ethylencopolymere für die Polyamid-Schlagzähmodifizierung wesentlich wirksamer als die mittels reiner Schmelze-pfropfung hergestellten carboxylierten Ethylencopolymere sind.
Das ist auf die durch den kombinierten Festphasen-/Schmelzecarboxylierungsprozess überraschend aufgetretene vorteilhafte Eigenschaftskombination zwischen hohem Carboxylierungsgrad und den für die PA-Modifizierung "passenden" rheologischen, anhand des MFR-Wertes sich widerspiegelnden Kennwerten zurückzuführen.

## Patentansprüche

1. Schlagzähe Polyamid-Formmassen der Zusammensetzung 40 bis 99 Masse-% eines thermoplastischen Polyamids und 1 bis 60 Masse-% einer Ethylencopolymer(blend)-Komponente erhalten dadurch, dass
in einer 1. Stufe
auf 100 Masseteile fest-fluides partikuläres Ethylencopolymer der Zusammensetzung > 90 bis 98 Masse-% Ethylen-/2 bis < 10 Masse-% C₃- bis C₈-Olefinein-heiten (LLDPE) und/oder > 75 bis 90 Masse-% Ethylen-/10 bis < 25 Masse-% C₄- bis C₈-Olefineinheiten (EOP)
0,1 bis 5 Masseteile eines Säuremonomers bzw. Säuremonomergemischs aus der Gruppe der α,β-ethylenisch ungesättigten Mono- und Dicarbonsäuren bzw. ihrer Anhydride hinzugefügt
und in Gegenwart von 0,001 bis 5 Masseteilen eines radikalbildenden Initiators mit einer 1-Stunde-Halbwertszeittemperatur (T_{HW/1h}) von 70 bis 140 °C bis zu einem auf die vorgelegte Ethylencopolymermenge bezogenen Säuremonomeranteil (Carboxylierungsgrad) von 0,05 bis 1,5 Masse-% bei Reaktionstemperaturen zwischen 50 und 130 °C gepfropft worden sind
und
anschließend in einer 2. Stufe
100 Masseteile des in der 1. Festphasenpfropfstufe carboxylierten Ethylenco polymers
nach Zumischung von 20 bis 500 Masseteilen eines unmodifizierten Ethylencopolymers der Zusammensetzung 50 bis 75 Masse-% Ethylen-/25 bis 50 Masse-%
C₄- bis C₈-Olefineinheiten (EOR) sowie
0,5 bis 60 Masseteilen eines Säuremonomers und
0,01 bis 12 Masseteilen eines radikalbildenden Initiators aus der Gruppe der organischen Peroxide mit einer 1-Stunden-Halbwertszeittemperatur (T_{HW/1h}) zwischen 100 und 200 °C in der Schmelze bei Massetemperaturen zwischen 180 und 280 °C bis zu einem Carboxylierungsgrad von 0,2 bis 5 Masse-% umgesetzt worden sind
und
in einer nachfolgenden 3. Stufe
1 bis 60 Masseteile des in der 2. Stufe erhaltenen Pfropfproduktes - allein oder in Form einer Mischung mit einem unmodifizierten Ethylencopolymer der Zusammensetzung 50 bis 75 Masse-% Ethylen-/25 bis 50 Masse-% C₄- bis C₈-Ole-fineinheiten (EOR), wobei der Anteil an unmodifiziertem EOR bis maximal 80 Masse-%, bezogen auf die aus dem Pfropfprodukt der 2. Stufe und unmodifiziertem EOR bestehende Gesamtmenge, betragen kann - in einem Extruder mit 40 bis 99 Masseteilen Polyamid bei einer Massetemperatur zwischen 180 und 320 °C compoundiert worden sind.

2. Schlagzähe Polyamid-Formmassen nach Anspruch 1, **dadurch gekennzeichnet, dass** bei der Herstellung in der ersten Stufe den 0,1 bis 5 Masseteilen eines Säuremonomers bzw. Säuremonomergemisches zusätzlich 0,05 bis 5 Masseteile mindestens eines Comonomers aus der Gruppe der Vinylaromaten und/oder der (Meth-)Acrylsäureester der primären C₁- bis C₁₂-Alkohole zugesetzt werden und in der zweiten Stufe das Gemisch aus dem in der ersten Stufe carboxylierten Ethylencopolymer und EOR zusätzlich 0,05 bis 30 Masseteile eines aus der Gruppe der Vinylaromaten ausgewählten Comonomers enthält.

3. Schlagzähe Polyamid-Formmassen nach den Ansprüchen 1 und 2, **dadurch gekennzeichnet, dass** das schlagzäh auszurüstende Polyamid unter den linearen und partiell aromatischen teilkristallinen sowie amorphen thermoplastisch verarbeitbaren Polyamiden mit einer relativen Viskosität von 2 bis 5, gemessen an einer einprozentigen Lösung in Kresol oder in 96-prozentiger Schwefelsäure bei 23 °C, ausgewählt worden ist.

4. Schlagzähe Polyamid-Formmassen nach einem oder mehreren der Ansprüche 1 bis 3, **dadurch gekennzeichnet, dass** das schlagzäh auszurüstende Polyamid unter PA 6, PA 6.6, einschließlich den aus ε-Caprolactam- und Hexamethylendiamin- /Adipinsäureeinheiten bestehenden Co-PA 6.6/6. sowie PA 4.6, PA 11 und PA 12 ausgewählt worden ist.

5. Verfahren zur Herstellung schlagzäher Polyamid-Formmassen der Zusammensetzung 40 bis 99 Masse-% eines thermoplastischen Polyamids und 1 bis 60 Masse-% einer Ethylencopolymer(blend)-Komponente, **dadurch gekennzeichnet, dass**
in einer 1. Stufe (Festphasenpfropfstufe)
auf 100 Masseteile fest-fluides partikuläres Ethylencopolymer der Zusammensetzung > 90 bis 98 Masse-% Ethylen-/2 bis < 10 Masse-% C₃- bis C₈-Olefineinhei-ten (LLDPE) und/oder > 75 bis 90 Masse-% Ethylen-/10 bis < 25 Masse-% C₄- bis C₈-Olefineinheiten (EOP)
0,1 bis 5 Masseteile eines Säuremonomers bzw. Säuremonomergemischs aus der Gruppe der α,β-ethylenisch ungesättigten Mono- und Dicarbonsäuren bzw. ihrer Anhydride - allein oder als Mischung mit 0,05 bis 5 Masseteilen mindestens eines Comonomers aus der Gruppe der Vinylaromaten und/oder der (Meth-)Acrylsäureester der primären C₁- bis C₁₂-Alkohole - hinzugefügt und in Gegenwart von 0,001 bis 5 Masseteilen eines radikalbildenden Initiators mit einer
1-Stunde-Halbwertszeittemperatur (T_{HW/1h}) von 80 bis 140 °C bis zu einem auf die vorgelegte Ethylencopolymermenge bezogenen Säuremonomeranteil (Carboxylierungsgrad) von 0,05 bis 1,5 Masse-% bei Reaktionstemperaturen zwischen 50 und 130 °C gepfropft werden
und
anschließend in einer 2. Stufe (Schmelzepfropfstufe)
100 Masseteile des in der 1. Festphasenpfropfstufe carboxylierten Ethylencopolymers nach Zumischung von 20 bis 500 Masseteilen eines unmodifizierten Ethylencopolymers der Zusammensetzung 50 bis 75 Masse-% Ethylen-/25 bis 50 Masse-% C₄- bis C₈-Olefineinheiten (EOR) sowie 0,5 bis 60 Masseteilen eines Säuremonomers - allein oder als Mischung mit 0,05 bis 30 Masseteilen eines aus der Gruppe der Vinylaromaten und/oder (Meth-)Acrylsäureester der primären C₁- bis C₁₂-Alkohole ausgewählten Comonomers - und 0,01 bis 12 Masseteilen eines radikalbildenden Initiators aus der Gruppe der organischen Peroxide mit einer 1-Stunden-Halbwertszeittemperatur (T_{HW/1h}) zwischen 100 und 200 °C in der Schmelze bei Massetemperaturen zwischen 180 und 280 °C bis zu einem Carboxylierungsgrad von 0,2 bis 5 Masse-% umgesetzt werden
und
in einer nachfolgenden 3. Stufe (Compoundierstufe)
1 bis 60 Masseteile des in der 2. Stufe erhaltenen Pfropfproduktes - allein oder in Form einer Mischung mit einem unmodifizierten Ethylencopolymer der Zusammensetzung 50 bis 75 Masse-% Ethylen-/25 bis 50 Masse-% C₄- bis C₈-Olefineinheiten (EOR), wobei der Anteil an unmodifiziertem EOR bis maximal 80 masse-%, bezogen auf die aus dem Pfropfprodukt der 2. Stufe und unmodifiziertem EOR bestehende Gesamtmenge, betragen kann - in einem Extruder mit 40 bis 99 Masseteilen Polyamid bei einer Massetemperatur zwischen 180 und 320°C compoundiert werden.

6. Verfahren zur Herstellung schlagzäher Polyamid-Formmassen nach Anspruch 5 **dadurch gekennzeichnet, dass** in einer 1. Stufe
auf 100 Masseteile pulveriges und/oder körniges und/oder granulares und/oder in anderer partikulärer Form vorliegendes Ethylencopolymer der Zusammensetzung > 90 bis 98 Masse-% Ethylen-/2 bis < 10 Hasse-% C₃- bis C₈-Olefineinheiten (LLDPE) 0,2 bis 4 Masseteile MSA - allein oder als Mischung mit einem auf die Gesamtmonomermasse bezogenen Comonomeranteil von maximal 50 Masse-% Styrol - hinzugefügt und in Gegenwart von 0.005 bis 2 Masseteilen eines radikalbildenden Initiators mit einer 1-Stunde-Halbwertszeittemperatur (T_{HW/1h}) zwischen 80 und 140 °C bis zu einem auf die vorgelegte LLDPE-Menge bezogenen MSA-Anteil (Carboxylierungsgrad) von 0,1 bis 1,2 Masse-% bei Reaktionstemperaturen zwischen 60 und 120 °C gepfropft werden
und
in einer 2. Stufe
100 Masseteile des in der 1. Festphasenpfropfstufe carboxylierten LLDPE nach Zumischung von 20 bis 500 Masseteilen eines unmodifizierten Ethylencopolymers der Zusammensetzung 50 bis 75 Masse-% Ethylen-/25 bis 50 Masse-% 1-Octeneinheiten (EOR*) sowie von 0,6 bis 30 Masseteilen MSA und 0,01 bis 10 Masseteilen eines radikalbildenden Initiators aus der Gruppe der organischen Peroxide mit einer 1-Stunden-Halbwertszeittemperatur (T_{HW/1h}) zwischen 100 und 200 °C in der Schmelze bei Massetemperaturen zwischen 200 und 260 °C bis zu einem Carboxylierungsgrad zwischen 0,3 und 4 Masse-% umgesetzt werden und
in einer nachfolgenden 3. Stufe
3 bis 30 Masseteile des in der 2. Stufe erhaltenen Pfropfproduktes - allein oder in Form einer Mischung mit einem unmodifizierten EOR*, wobei der Anteil an unmodifiziertem EOR* bis maximal 80 Masse-%, bezogen auf die aus dem Pfropfprodukt der 2. Stufe und unmodifiziertem EOR* bestehende Gesamtmenge betragen kann - zusammen mit 70 bis 97 Masseteilen eines unter PA 6. PA 6.6. Co-PA 6.6/6, PA 12 und PA 11, einschließlich ihrer Mischungen untereinander, ausgewählten Polyamids in einem Extruder bei einer Massetemperatur zwischen 200 und 290 °C compoundiert werden.

## Claims

1. Impact-resistant polyamide moulding compositions comprising 40 to 99 percent by weight of a thermoplastic polyamide resin and 1 to 60 percent by weight of an ethylene copolymer (blend) component, obtained in a process where
in a 1^{st} step,
0.1 to 5 parts by weight of an acid monomer, or an acid monomer mixture from the group of α,β-ethylenically unsaturated monocarboxylic and dicarboxylic acids or their anhydrides have been added to 100 parts by weight of a solid-fluid particulate ethylene copolymer comprising more than 90 to 98 percent by weight of ethylene units and 2 to less than 10 percent by weight of C₃-C₈ olefin units (LLDPE) and/or more than 75 to 90 percent by weight of ethylene units and 10 to less than 25 percent by weight of C₄-C₈ olefin units (EOP), and have *been* grafted to an acid monomer content (degree of carboxylation) of 0.05 to 1.5 percent by weight, based on the input ethylene copolymer amount, at a reaction temperature between 50 and 130 °C in the presence of 0.001 to 5 parts by weight of a radical initiator with an 1-hour half-life temperature (T_{HW/1h}) of 70 to 140 °C (solid state grafting), and
in a following 2^{nd} step,
20 to 500 parts by weight of an unmodified ethylene copolymer comprising 50 to 75 percent by weight of ethylene units and 25 to 50 percent by weight of C₄-C₈ olefin units (EOR), 0.5 to 60 parts by weight of an acid monomer, and 0.01 to 12 parts by weight of a radical initiator selected from organic peroxides with an 1-hour half-life temperature (T_{HW/1h}) between 100 and 200 °C have been added to 100 parts by weight of the carboxylated ethylene copolymer obtained by 1^{st} solid-state grafting step, and have been reacted in melt stage at a bulk temperature between 180 and 280 °C to reach a degree of carboxylation from 0.2 to 5 percent by weight (melt grafting), and
in a following 3^{rd} step,
1 to 60 parts by weight of the grafted product obtained by the 2^{nd} step, either alone or in form of a mixture with an unmodified ethylene copolymer comprising 50 to 75 percent by weight of ethylene units and 25 to 50 percent by weight of C₄-C₈ olefin units (EOR), where the content of the unmodified EOR can be maximally 80 percent by weight, based on the total quantity of the grafted product from the 2^{nd} step plus the unmodified EOR, have been compounded with 40 to 99 parts by weight of a polyamide resin using an extruder at a bulk temperature between 180 and 320 °C.

2. Impact-resistant polyamide moulding compositions according to claim 1, **characterized in that** 0.05 to 5 parts by weight of at least one comonomer from the group of vinyl aromatic hydrocarbons and/or the group of (meth)acrylic-acid esters of primary C₁-C₁₂ alcohols have been added to 0.1 to 5 parts by weight of an acid monomer, or an acid monomer mixture used for the 1^{st} step of the process, and for the 2^{nd} step of the process additionally 0.05 to 30 parts by weight of a comonomer selected from vinyl aromatic hydrocarbons to the mixture containing the 1^{st} step carboxylated ethylene copolymer and EOR.

3. Impact-resistant polyamide moulding compositions according to claims 1 and 2, **characterized in that** the polyamide has been selected from linear and partially aromatic semi-crystalline or amorphous thermoplastic polyamide resins with a relative viscosity from 2 to 5, measured at an 1-percent solution in cresol or in 96-percent sulfuric acid at 23 °C.

4. Impact-resistant polyamide moulding compositions as claimed in any of the claims 1 to 3, **characterized in that** the polyamide resin has been selected from PA 6, PA 6.6, including the Co-PA PA 6.6/6 composed of ε-caprolactam units, hexamethylene diamine and adipic acid units, and PA 4.6, PA 11 and PA 12.

5. A process for preparing impact-resistant polyamide moulding compositions comprising of 40 to 99 percent by weight of a thermoplastic polyamide resin and 1 to 60 percent by weight of an ethylene copolymer (blend) component, **characterized in that**
in a 1^{st} step (the solid state grafting step),
0.1 to 5 parts by weight of an acid monomer, or an acid monomer mixture selected from α,β-ethylenically unsaturated monocarboxylic and dicarboxylic acids or their anhydrides, either alone or in form of a mixture with 0.05 to 5 parts by weight of at least one comonomer selected from vinyl aromatic hydrocarbons and/or (meth)acrylic-acid esters of primary C₁-C₁₂ alcohols, are added to 100 parts by weight of a solid-fluid particulate ethylene copolymer comprising more than 90 to 98 percent by weight of ethylene units and 2 to less than 10 percent by weight of C₃-C₈ olefin units (LLDPE) and/or a particulate ethylene copolymer comprising more than 75 to 90 percent by weight of ethylene units and 10 to less than 25 percent by weight of C₄-C₈ olefin units (EOP), and are grafted at a reaction temperature between 50 and 130 °C in the presence of 0.001 to 5 parts by weight of a radical initiator with an 1-hour half-life temperature (T_{HW/1h}) of 80 to 140 °C to reach an acid monomer content (degree of carboxylation) from 0.05 to 1.5 percent by weight, based on the input ethylene copolymer amount, and
in a following 2^{nd} step (the melt grafting step),
20 to 500 parts by weight of an unmodified ethylene copolymer comprising 50 to 75 percent by weight of ethylene units and 25 to 50 percent by weight of C₄-C₈ olefin units (EOR), 0.5 to 60 parts by weight of an acid monomer, either alone or in form of a mixture with 0.05 to 30 parts by weight of a comonomer selected from vinyl aromatic hydrocarbons and/or (meth)acrylic-acid esters of primary C₁-C₁₂ alcohols, and 0.01 to 12 parts by weight of a radical initiator selected from organic peroxides with an 1-hour half-life temperature (T_{HW/1h}) between 100 and 200 °C are added to 100 parts by weight of the carboxylated ethylene copolymer obtained by 1^{st} solid state grafting step carboxylation, and are reacted in melt stage at a bulk temperature between 180 and 280 °C to reach a degree of carboxylation from 0.2 to 5 percent by weight, and
in a following 3^{rd} step (the compounding step),
1 to 60 parts by weight of the grafted product obtained by the 2^{nd} step, either alone or in form of a mixture with an unmodified ethylene copolymer comprising 50 to 75 percent by weight of ethylene units and 25 to 50 percent by weight of C₄-C₈ olefin units (EOR), where the content of the unmodified EOR can be maximally 80 percent by weight, based on the total quantity of the 2^{nd} step graft product plus the unmodified EOR, are compounded with 40 to 99 parts by weight of a polyamide resin using an extruder at a bulk temperature between 180 and 320 °C.

6. A process for preparing impact-resistant polyamide moulding compositions according to claim 5, **characterized in that**
in a 1^{st} step,
0.2 to 4 parts by weight of maleic anhydride, either alone or in form of a mixture containing maximally 50 percent by weight of styrene as comonomer, based on the total quantity of momomers, are added to 100 parts by weight of a powdered and/or granulate and/or other particulate ethylene copolymer comprising more than 90 to 98 percent by weight of ethylene units and 2 to less than 10 percent by weight of C₃-C₈ olefin units (LLDPE), and are grafted at a reaction temperature between 60 and 120 °C in the presence of 0.005 to 2 parts by weight of a radical initiator with an 1-hour half-life temperature (T_{HW/1h}) of 80 to 140°C to reach a maleic acid content (degree of carboxylation) from 0.1 to 1.2 percent by weight, based on the input LLDPE amount, and
in a following 2^{nd} step,
20 to 500 parts by weight of an unmodified ethylene copolymer comprising 50 to 75 percent by weight of ethylene units and 25 to 50 percent by weight of 1-octene units (EOR*), 0.6 to 30 parts by weight of maleic anhydride, and 0.01 to 10 parts by weight of a radical initiator selected from organic peroxides with an 1-hour half-life temperature (T_{HW/1h}) between 100 and 200 °C are added to 100 parts by weight of the carboxylated LLDPE obtained by 1^{st} solid state grafting step, and are reacted in melt stage at a bulk temperature between 200 and 260 °C to reach a degree of carboxylation between 0.3 and 4 percent by weight, and
in a following 3^{rd} step (the compounding step),
3 to 30 parts by weight of the grafted product obtained by the 2^{nd} step, either alone or in form of a mixture with an unmodified EOR*, where the content of the unmodified EOR* can be maximally 80 percent by weight, based on the total quantity of the 2^{nd} step graft product plus the unmodified EOR*, are compounded with 70 to 97 parts by weight of a polyamide resin selected from PA 6, PA 6.6, Co-PA 6.6/6, PA 12, PA 11, or their mixtures using an extruder at a bulk temperature between 200 and 290 °C.

## Revendications

1. Matières moulées en polyamide résistantes au choc d'une constitution de 40 à 99 % en masse d'un polyamide thermoplastique et de 1 à 60 % en masse d'une composante de copolymère d'éthylène (mélange) obtenues par le fait que
dans une première étape
sur 100 parts de la masse solide-fluide de copolymère d'éthylène particulier d'une constitution de > 90 jusqu'à 98 % de la masse d'unités d'éthylène et de 2 jusqu'à < 10 % en masse d'unités d'oléfine de C₃ jusqu'à C₈ (PE-Ibd) et/ou de > 75 jusqu'à 90 % en masse d'unités d'éthylène et de 10 jusqu'à < 25 % en masse d'unités d'oléfine de C₄ jusqu'à C₈ (EOP) ont été additionnées de 0,1 jusqu'à 5 parts en masse d'un monomère acide ou d'un mélange de monomères acides du groupe des acides monocarboxyliques et dicarboxyliques éthyléniques α, β non saturés ou de leurs anhydrides et ont été greffées en présence de 0,001 jusqu'à 5 parts en masse d'un initiateur formant des radicaux avec une température du temps de demi-réaction d'une heure (T_{HW/1h}) de 70 à 140 °C jusqu'à une part de 0,05 jusqu'à 1,5 % en masse de monomère acide dans la quantité de copolymère d'éthylène présentée (degré de carboxylation) par des températures de réaction entre 50 et 130 °C et
ensuite dans une deuxième étape
100 parts en masse du copolymère d'éthylène carboxylées dans la première étape de greffage en phase solide ont été transformées après y avoir mélangé 20 jusqu'à 500 parts en masse d'un copolymère d'éthylène non modifié d'une constitution de 50 à 75 % en masse d'unités d'éthylène et de 25 à 50 % en masse d'unités d'oléfine de C₄ jusqu'à C₈ (EOR) ainsi que de 0,5 à 60 parts en masse d'un monomère acide et de 0,01 jusqu'à 12 parts en masse d'un initiateur du groupe des peroxydes organiques formant des radicaux avec une température du temps de demi-réaction d'une heure (T_{HW/1h}) entre 100 et 200 °C dans la fonte par des températures de la masse situées entre 180 et 280 °C jusqu'à un degré de carboxylation de 0,2 jusqu'à 5 % de la masse et
dans une troisième étape consécutive
1 jusqu'à 60 parts en masse du produit greffé obtenu dans la deuxième étape ont été combinées - seules ou sous forme d'un mélange avec un copolymère d'éthylène non modifié d'une constitution de 50 jusqu'à 75 % en masse d'unités d'éthylène et de 25 jusqu'à 50 % d'unités d'oléfine de C₄ jusqu'à C₈ (EOR), la part en EOR non modifié pouvant s'élever au maximum jusqu'à 80 % en masse, par rapport à la quantité totale composée du produit greffé de la deuxième étape et de l'EOR non modifié - dans une extrudeuse avec 40 jusqu'à 99 parts en masse de polyamide par une température de la matière entre 180 et 320 °C.

2. Matières moulées en polyamide résistantes au choc selon la revendication 1 **caractérisées par le fait que** lors de la production dans la première étape il fut ajouté, aux 0,1 jusqu'à 5 parts en masse d'un monomère acide ou d'un mélange de monomères acides, de 0,05 jusqu'à 5 parts en masse au moins d'un comonomère du groupe des aromatiques de vinyle et / ou des esters (méth-) acryliques des alcools primaires de C₁ jusqu'à C₁₂ et que dans la deuxième étape le mélange de copolymère d'éthylène carboxylé et d'EOR provenant de la première étape contient de plus 0,05 jusqu'à 30 parts en masse d'un comonomère choisi dans le groupe des aromatiques de vinyle.

3. Matières moulées en polyamide résistantes au choc selon les revendications 1 et 2 **caractérisées par le fait que** le polyamide modifiant-choc a été choisi parmi les polyamides aromatiques linéaires partiellement cristallins et amorphes, pouvant être transformés thermoplastiquement, avec une viscosité relative de 2 à 5 mesurée sur une solution d'un pour cent dans le crésol ou dans de l'acide sulfurique à 96 % sous 23 °C.

4. Matières moulées en polyamide résistantes au choc selon une ou plusieurs des revendications de 1 à 3 **caractérisées par le fait que** le polyamide modifiant-choc a été choisi parmi les PA 6, PA6.6, y compris les Co-PA 6.6/6, constitués d'unités de ε-caprolactame et d'hexaméthylènediamine et d'unités d'acide adipique, ainsi que les PA 4.6, PA 11 et PA 12.

5. Procédé de production de matières moulées en polyamide résistantes au choc d'une constitution de 40 à 99 % en masse d'un polyamide thermoplastique et de 1 à 60 % en masse d'une composante de copolymère d'éthylène (mélange), **caractérisé par le fait que** dans un première étape (étape de greffe en phase solide) 100 parts de la masse solide-fluide de copolymère d'éthylène particulier d'une constitution de > 90 jusqu'à 98 % de la masse d'unités d'éthylène et de 2 jusqu'à < 10 % en masse d'unités d'oléfine de C₃ jusqu'à C₈ (PE-lbd) et/ou de > 75 % jusqu'à 90 % en masse d'unités d'éthylène et de 10 jusqu'à < 25 % en masse d'unités d'oléfine de C₄ jusqu'à C₈ (EOP) sont additionnées de 0,1 à 5 parts en masse d'un monomère acide ou d'un mélange de monomères acides du groupe des acides monocarboxyliques et dicarboxyliques éthyléniques α, β non saturés ou de leurs anhydrides et sont greffées - seules ou comme mélange avec 0,05 jusqu'à 5 parts en masse au moins d'un comonomère du groupe des aromatiques de vinyle et / ou des esters (méth-) acryliques des alcools primaires de C₁ jusqu'à C₁₂ - et en présence de de 0,001 jusqu'à 5 parts en masse d'un initiateur formant des radicaux avec une température du temps de demi-réaction d'une heure (T_{HW/1h}) de 80 à 140 °C jusqu'à une proportion de monomère acide rapportée à la quantité de copolymère d'éthylène présentée (degré de carboxylation) de 0,05 jusqu'à 1,5 % en masse par des températures de réaction entre 50 et 130 °C et
ensuite dans une deuxième étape (étape de greffage de la masse fondue)
100 parts en masse du copolymère d'éthylène carboxylé dans la première étape de greffage en phase solide ont été transformées après y avoir mélangé 20 jusqu'à 500 parts en masse d'un copolymère d'éthylène non modifié d'une constitution de 50 à 75 % en masse d'unités d'éthylène et de 25 à 50 % en masse d'unités d'oléfine de C₄ jusqu'à C₈ (EOR) ainsi que de 0,5 à 60 parts en masse d'un monomère acide - seules ou comme mélange avec 0,05 jusqu'à 30 parts en masse
d'un comonomère choisi dans le groupe des aromatiques de vinyle et / ou des esters (méth-) acryliques des alcools primaires de C₁ jusqu'à C₁₂ - et de 0,01 jusqu'à 12 parts en masse d'un initiateur du groupe des peroxydes organiques formant des radicaux avec une température du temps de demi-réaction d'une heure (T_{HW/1h}) entre 100 et 200 °C dans la fonte par des températures de la masse situées entre 180 et 280 °C jusqu'à un degré de carboxylation de 0,2 jusqu'à 5 % de la masse et dans une troisième étape consécutive (étape de compoundage)
1 jusqu'à 60 parts en masse du produit greffé obtenu dans la deuxième étape sont combinées - seules ou sous forme d'un mélange avec un copolymère d'éthylène non modifié de la constitution de 50 jusqu'à 75 % en masse d'unités d'éthylène et de 25 jusqu'à 50 % d'unités d'oléfine de C₄ jusqu'à C₈ (EOR), la part en EOR non modifié pouvant s'élever jusqu'au maximum à 80 % en masse, par rapport à la quantité totale composée du produit greffé de la deuxième étape et de l'EOR non modifié - dans une extrudeuse avec 40 jusqu'à 99 parts en masse de polyamide par une température de la matière entre 180 et 320 °C.

6. Procédé de production de matières moulées en polyamide résistantes au choc selon la revendication 5 **caractérisé par le fait que** dans une première étape
100 parts en masse d'un copolymère d'éthylène pulvérulent et/ou grenu et/ou granulaire et/ou sous une autre forme particulière en présence d'une constitution de > 90 jusqu'à 98 % en masse d'unités d'éthylène et de 2 jusqu'à < 10 % en masse d'unités d'oléfine de C₃ jusqu'à C₈ (PE-Ibd) sont additionnées de 0,2 jusqu'à 4 % en masse d'anhydride maléique et sont greffées - seules ou en mélange avec une part de comonomère de 50 % en masse au maximum de styrène par rapport à la masse totale de monomère et en présence de 0,005 jusqu'à 2 % en masse d'un initiateur formant des radicaux avec une température du temps de demi-réaction d'une heure (T_{HW/1h}) entre 80 et 140 °C jusqu'à une part d'anhydride maléique (degré de carboxylation) de 0,1 jusqu'à 1,2 en masse rapportée à la quantité présentée de PE-Ibd par des températures de réaction situées entre 60 et 120 °C et
ensuite dans une deuxième étape
100 parts en masse du PE-Ibd carboxylé dans la première étape de greffage en phase solide sont transformées
après y avoir mélangé 20 jusqu'à 500 parts en masse d'un copolymère d'éthylène non modifié d'une constitution de 50 à 75 % en masse d'unités d'éthylène et de 25 à 50 % en masse d'unités de 1-octène (EOR*) ainsi que de 0,6 à 30 parts en masse d'anhydride maléique et de 0,01 jusqu'à 10 parts en masse d'un initiateur du groupe des peroxydes organiques formant des radicaux avec une température du temps de demi-réaction d'une heure (T_{HW/1h}) entre 100 et 200 °C dans la fonte par des températures de la masse situées entre 200 et 260 °C jusqu'à un degré de carboxylation de 0,3 jusqu'à 4 % de la masse et dans une troisième étape consécutive
3 jusqu'à 30 parts en masse du produit greffé obtenu dans la deuxième étape sont combinées - seules ou sous forme d'un mélange avec un EOR* non modifié, la part en EOR* non modifié pouvant être au maximum de 80 % en masse, par rapport à la quantité totale composée du produit greffé de la deuxième étape et de l'EOR* non modifié - en commun avec 70 jusqu'à 97 parts en masse d'un polyamide sélectionné parmi PA 6, PA 6.6, Co-PA 6.6/6, PA 12 et PA 11, y compris leurs mélanges entre eux, dans une extrudeuse par une température de la matière entre 200 et 290 °C.
